# EUROPÄISCHE PATENTSCHRIFT

(11) **EP 1 871 647 B1**
(45) Veröffentlichungstag und Bekanntmachung des Hinweises auf die Patenterteilung: **01.04.2009**
(21) Anmeldenummer: 06722758.7
(22) Anmeldetag: 03.04.2006
(51) Int. Cl.: B60R 22/03

(54) **GURTBRINGER FÜR EIN KRAFTFAHRZEUG**
SEAT-BELT PRESENTER FOR A MOTOR VEHICLE
APPROCHE-CEINTURE DE SECURITE POUR UN VEHICULE AUTOMOBILE

(30) Priorität: 12.04.2005 DE 102005017750
(43) Veröffentlichungstag der Anmeldung: 02.01.2008
(73) Patentinhaber: Brose Fahrzeugteile GmbH & Co. KG, Coburg, 96450 Coburg (DE)
(72) Erfinder: DALLWIG, Claus, 96472 Rödental (DE); FREISLEBEN, Bernd, 96231 Bad Staffelstein (DE)
(74) Vertreter: Baumgärtel, Gunnar
(86) Internationale Anmeldenummer: PCT/DE2006/000609
(87) Internationale Veröffentlichungsnummer: WO 2006/108383

(56) Entgegenhaltungen:
- DE-A1- 3 537 089
- DE-A1- 19 901 276
- GB-A- 2 235 361
- GB-A- 2 235 362
- US-A1- 2001 040 369

## Beschreibung

Die Erfindung betrifft einen Gurtbringer für ein Kraftfahrzeug gemäß dem Oberbegriff des Anspruchs 1. Solch ein Gurtbringer ist z.B. aus der GB 2 235 361 A1 bekannt.

Es sind Gurtbringer für Kraftfahrzeuge bekannt, die ein Führungsmittel und eine an dem Führungsmittel angeordnete Gurtfangeinrichtung zum Zuführen eines Sicherheitsgurtes aufweisen. Während der Zuführung bewegt sich die Gurtfangeinrichtung aus einer Ruheposition in der Innenverkleidung des Kraftfahrzeuges heraus, ergreift einen Sicherheitsgurt und bewegt diesen in eine Anbietposition, in der eine auf einem Kraftfahrzeugsitz sitzende Person den Sicherheitsgurt leicht fassen kann. Die Gurtfangeinrichtung enthält eine Schwenkeinrichtung, die ein Schwenkelement während der Zuführung des Gurtbringers aus einer Ruheposition in eine quer zur Bewegungsbahn verlaufende, gespreizte Position verschwenkt und mit dem Schwenkelement in gespreizter Position den Sicherheitsgurt ergreift und ihn in die Anbietposition bewegt.

Das Schwenkelement liegt in seiner Ruheposition vor Beginn der Zuführung an der Führungsstange an, wird während der Zuführung in Bewegungsrichtung verschwenkt, bis eine gespreizte Position quer zur Bewebungsbahn erreicht ist, und greift so mit einer geschwungenen Fangfläche den Sicherheitsgurt und führt ihn dem Benutzer zu. Damit bei der Zuführung des Sicherheitsgurtes die durch den Sicherheitsgurt auf das Schwenkelement ausgeübte Kraft nicht zu einem Einschwenken des Schwenkelementes führt, wird eine Verriegelungsvorrichtung benötigt.

Aufgabe der vorliegenden Erfindung ist es, einen Gurtbringer der eingangs beschriebenen Art zur Verfügung zu stellen, der eine Schwenkeinrichtung für ein Schwenkelement mit einer einfachen und sicheren Verriegelungsvorrichtung aufweist, die ein Rückführen des Gurtbringers auch im manuellen Notfallbetrieb ohne mechanische Beschädigung des Gurtbringers ermöglicht.

Diese Aufgabe wird erfindungsgemäß durch die Merkmale des Anspruchs 1 gelöst.

Die erfindungsgemäße Lösung schafft einen Gurtbringer, der einen Sicherheitsgurt sicher zuführt und im Notfall manuell in die Innenverkleidung des Kraftfahrzeugs geschoben werden kann, ohne dass der Gurtbringer beschädigt wird.

Erfindungsgemäß ist vorgesehen, dass die Schwenkeinrichtung eine Verriegelungsvorrichtung aufweist, die
- im Zuführbetrieb das quer zur Bewegungsbahn verschwenkte Schwenkelemente so verriegelt, dass durch Kraftwirkung des Sicherheitsgurtes auf das Schwenkelement während des Zuführens das Schwenkelement nicht einschwenkt,
- das Einschwenken des Schwenkelementes im Notfallbetrieb auch im verriegelten Zustand erlaubt, ohne dass dabei der Gurtbringer mechanisch beschädigt wird, und
- während der Rückführung automatisch entriegelt wird.

Während der Zuführung des Gurtbringers verschwenkt die Schwenkeinrichtung das Schwenkelement in Bewegungsrichtung in eine quer zur Bewegungsrichtung verlaufende, gespreizte Position und verriegelt es in dieser Position mit Hilfe der Verriegelungsvorrichtung. Dadurch wird verhindert, dass die durch den Sicherheitsgurt auf das Schwenkelement ausgeübte Kraft zum Einschwenken des Schwenkelementes führt. Die Verriegelungsvorrichtung ist gleichzeitig für einen eventuellen Notfallbetrieb so beschaffen, dass das Schwenkelement auch in verriegeltem Zustand durch manuellen Kraftaufwand eingeschwenkt werden kann. Während der Rückführung wird die Verriegelung automatisch aufgehoben, unabhängig davon, ob die Rückführung in normalem Betrieb über einen Antrieb oder im Notfallbetrieb manuell erfolgt. Durch eine solche Verriegelungsvorrichtung wird sicher gestellt, dass bei manueller Rückführung, zum Beispiel bei Ausfall der elektrischen Versorgung, der Gurtbringer mechanisch nicht beschädigt wird und insbesondere das Schwenkelement nicht abbricht.

Die Schwenkeinrichtung ist so ausgelegt, dass das Einschwenken des Schwenkelementes einerseits während des Zuführens durch die vom Sicherheitsgurt auf das Schwenkelement ausgeübte Kraft nicht möglich ist, andererseits aber erfolgen kann, wenn eine Kraft auf das Schwenkelement ausgeübt wird, die um einen durch die Auslegung der Schwenkeinrichtung einstellbaren Faktor größer ist als die Kraftwirkung des Sicherheitsgurtes. Dadurch wird eine Sicherheitsvorkehrung für den Notfallbetrieb geschaffen, die ein Abbrechen des Schwenkelementes verhindert.

Die Schwenkeinrichtung und die Verriegelungsvorrichtung werden bevorzugt durch die Zuführbewegung des Führungsmittels gesteuert. Dieses kann durch mechanische Elemente, insbesondere verschiebbare Elemente und Federelemente, erfolgen, die mit dem Führungsmittel zusammenwirken und während der Zu- und Rückführung relativ zum Führungsmittel verschoben werden. Es ist aber auch denkbar, dass ein oder mehrere separate, insbesondere elektrische Antriebe zum Betrieb der Schwenkeinrichtung verwendet werden.

In einer Variante weist die Schwenkeinrichtung ein Steuerelement auf, das mit einem Verriegelungselement, einem Anschlagelement, dem Schwenkelement, einem Getriebe und dem Führungsmittel so zusammenwirkt, dass durch die Zuführbewegung das Schwenkelement in seine gespreizte Position verschwenkt und verriegelt wird. Das Steuerelement ist dabei über einen Koppelbereich und ein Getriebe mit dem Schwenkelement verbunden, wird durch die Zuführung und die damit verbundene Bewegung des Führungsmittels relativ zum Führungsmittel verschoben und steuert so das Verschwenken des Schwenkelementes in die gespreizte Position. Das Steuerelement wiederum ist mit dem Verriegelungselement verbunden, das zusammen mit dem Anschlagelement das Schwenkelement in der gespreizten Position verriegelt.

Als Sicherheitsvorkehrung für den Notfallbetrieb lässt sich das Schwenkelement aus seiner gespreizten Position manuell einschwenken, wenn eine Kraft auf das Schwenkelement ausgeübt wird, die die Kraftwirkung des Sicherheitsgurtes auf das Schwenkelement übersteigt. Für diesen Zweck kann die Schwenkeinrichtung mechanische Federn und zusätzliche verschiebbare Elemente enthalten, die auf das Steuerelement, das Verriegelungselement und das Anschlagelement so einwirken, dass das Schwenkelement in der Zuführbewegung verschwenkt und in der gespreizten Position gehalten wird. Durch die Wahl der Federelemente und des Verhältnisses der Federkräfte zueinander kann eingestellt werden, bei welchem manuellen Kraftaufwand das Einschwenken des Schwenkelementes ermöglicht wird.

Darüber hinaus kann mit den Federelementen das Verschwenken des Schwenkelementes während der Zuführung gesteuert werden, so dass das Verschwenken bevorzugt erst beginnt, nachdem das Schwenkelement aus der Innenverkleidung ausgetreten ist. Auf diese Weise wird sicher gestellt, dass das Schwenkelement während des Verschwenkens die Innenverkleidung nicht berührt und beschädigt und auch selbst nicht durch die Innenverkleidung beschädigt wird.

In einer Variante enthält eine solche Schwenkeinrichtung einen Schieber und drei Federelemente. Über zwei Federelemente sind das Steuerelement und das Anschlagelement mit dem relativ zur Kraftfahrzeugkarosserie verschiebbaren Führungsmittel verschiebbar verbunden, während das dritte Federelement den Schieber verschiebbar mit der Kraftfahrzeugkarosserie koppelt. Das Verriegelungselement ist über eine Drehachse mit dem Steuerelement verbunden und wird zur Verriegelung des Schwenkelementes in der gespreizten Position so um die Drehachse verschwenkt, dass es durch das mit Federkraft in Position gehaltene Anschlagelement relativ zum Führungsmittel in Zuführrichtung blockiert wird. Durch die Wahl der das Steuerelement und das Anschlagelement in Position haltenden Federelemente kann die Größe der Kraft eingestellt werden, die nötig ist, um das Schwenkelement in verriegelter Position im Notfall einzuschwenken.

Um sicher zu stellen, dass das Verriegelungselement während der Rückführung in seine Ausgangslage verschwenkt und das Schwenkelement somit entriegelt wird, tritt das Verriegelungselement während der Rückführung des Führungsmittels in eine kraftschlüssige Verbindung mit dem Schieber und wird dadurch aus der Verriegelungsposition in seine Ausgangslage verschwenkt. Das Verschwenken des Verriegelungselementes wird durch die Winkelstellung des Verriegelungselementes in der Verriegelungsposition relativ zum Schieber bewirkt und kann durch geeignete Formgebung des Schiebers und des Verriegelungselementes im Bereich ihrer Berührungsstellen unterstützt werden.

Anhand eines in den folgenden Figuren dargestellten Ausführungsbeispieles soll der der Erfindung zugrunde liegende Gedanke näher und weiter erläutert werden. Es zeigen:
- Figur 1: eine schematische Seitenansicht des Gurtbringers in der Ruheposition in der Innenverkleidung;
- Figur 2: eine schematische Seitenansicht des Gurtbringers während der Zuführung vor Erreichen der Schwenklage;
- Figur 3: eine schematische Seitenansicht des Gurtbringers während der Zuführung mit dem Schwenkelement in gespreizter und verriegelter Position;
- Figur 4: eine schematische Seitenansicht des Gurtbringers zu Beginn der manuellen Rückführung;
- Figur 5: eine schematische Seitenansicht des Gurtbringers während der manuellen Rückführung;
- Figur 6: eine schematische Seitenansicht des Gurtbringers während der manuellen Rückführung mit dem Schwenkelement in eingeschwenktem Zustand und
- Figur 7: eine schematische Seitenansicht des Gurtbringers während der manuellen Rückführung mit dem Schwenkelement in entriegeltem Zustand.

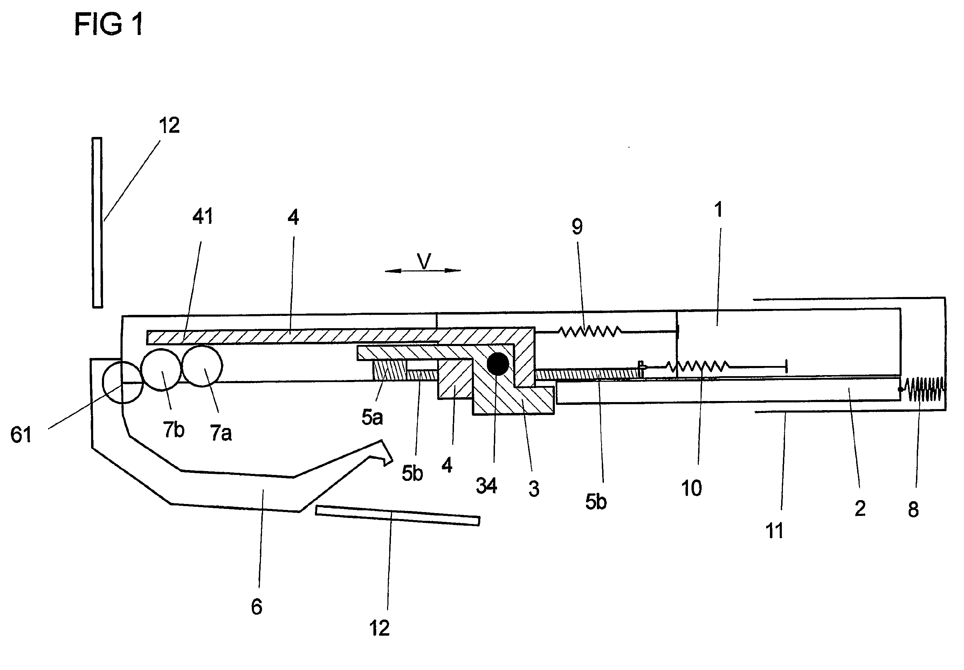

Fig. 1 zeigt eine Seitenansicht eines Gurtbringers, der ein als Führungsstange 1 ausgebildetes Führungsmittel mit einer daran angeordneten Gurtfangeinrichtung umfasst. Die Führungsstange 1 des Gurtbringers ist von einer gehäuseartigen Montageeinrichtung 11 umgeben, mit der der Gurtbringer an einer Kraftfahrzeugkarosserie befestigt ist und an der ein Motor und eine mit dem Motor verbundene Getriebeeinrichtung angeordnet sind, die als Antrieb zur Zuführung bzw. Rückführung der Führungsstange 1 dienen. Während der Zuführung des Gurtbringers bewegt sich die Führungsstange 1 durch eine Öffnung in der Innenverkleidung 12, ergreift mit der Gurtfangeinrichtung den Sicherheitsgurt und führt diesen in eine Anbietposition, in der eine auf einem Kraftfahrzeugsitz sitzende Person den Sicherheitsgurt leicht fassen kann, um sich anzuschnallen. Die Gurtfangeinrichtung weist eine Schwenkeinrichtung mit einem Schwenkelement 6 auf, das während der Zuführung in Bewegungsrichtung in eine quer zur Bewegungsbahn verlaufende, gespreizte Position verschwenkt wird und den Sicherheitsgurt ergreift.

In Fig. 1 ist der Gurtbringer in einer Ruheposition vor Beginn der Zuführung gezeigt, in der die Führungsstange 1 in die Innenverkleidung 12 eingefahren ist und durch die Innenverkleidung 12 verdeckt wird. Vom Kraftfahrzeuginnenraum her ist vom Gurtbringer in diesem Zustand einzig und allein das Schwenkelement 6 sichtbar, das die Öffnung in der Innenverkleidung 12 im wesentlichen verschließt. Dabei wird eine besonders vorteilhafte optische Anmutung erzielt, wenn sich die dem Kraftfahrzeuginnenraum zugewandte Oberflächenkontur des Schwenkelementes 6 der Formgebung der Innenverkleidung 12 anpasst.

Das Verschwenken des Schwenkelementes 6 während der Zu- und Rückführung erfolgt durch eine Schwenkeinrichtung, die so ausgebildet ist, dass sowohl das Verschwenken des Schwenkelementes 6 in die gespreizte Position als auch das Einschwenken durch die Zu- bzw. Rückführbewegung der Führungsstange 1 gesteuert werden. Die Schwenkeinrichtung umfasst eine Verriegelungsvorrichtung, mittels derer das Schwenkelement 6 in der gespreizten Position verriegelt wird, so dass ein Einschwenken des Schwenkelementes 6 durch die Kraftwirkung des Sicherheitsgurtes nicht möglich ist. Die Funktionsweise der Schwenkeinrichtung und der Verriegelungsvorrichtung wird nachfolgend genauer erläutert.

Fig. 1 bis 7 zeigen schematisch den Gurtbringer in verschiedenen Positionen vor und während der Zu- bzw. Rückführung.

Fig. 1 zeigt den Gurtbringer zunächst in der Ruheposition vor Beginn der Zuführung. Die Schwenkeinrichtung ist durch verschiebbare Elemente und mechanische Federn ausgebildet und weist einen Schieber 2, ein Verriegelungselement 3, ein Steuerelement 4 und ein Anschlagelement 5a, 5b auf, die im wesentlichen parallel zur Führungsstange angeordnet sind. Der Schieber 2 ist über ein erstes Federelement 8 in Form einer Druckfeder mit der Montageeinrichtung 11 verbunden und lässt sich entlang der Verschiebungsachse V im wesentlichen parallel zur Führungsstange 1 verschieben. Der Verschiebeweg des Schiebers 2 kann in beide Richtungen entlang der Verschiebungsachse V mit mechanischen Anschlägen begrenzt sein. Das Steuerelement 4 und das Anschlagelement 5a, 5b sind über zwei weitere Federelemente 9, 10, ausgebildet als Zugfedern, mit der Führungsstange 1 verbunden und können parallel zur Führungsstange 1 verschoben werden. Das Verriegelungselement 3 ist über eine Drehachse 34 mit dem Steuerelement 4 derart verbunden, dass es um die Drehachse 34 verschwenkbar ist. In der Ruheposition erstreckt sich das Verriegelungselement 3 im wesentlichen parallel zur Verschiebungsachse V und steht mit dem einen Ende des Schiebers 2 in kraftschlüssiger Verbindung. Darüber hinaus ist das Verriegelungselement 3 durch eine in Fig. 1 nicht dargestellte Dreh- oder Biegefeder entgegen dem Uhrzeigersinn gegenüber dem Steuerelement 4 vorgespannt.

In der Ruheposition vor Beginn der Zuführung ist die mit dem Schieber 2 verbundene Druckfeder 8 in ihrem maximal komprimierten Zustand, während die mit dem Steuerelement 4 verbundene Zugfeder in maximal gedehntem Zustand ist. Dadurch wird das Steuerelement 4 über die kraftschlüssige Verbindung des Schiebers 2 mit dem Verriegelungselement 3, das mit dem Steuerelement 4 über die Drehachse 34 verbunden ist, vorgespannt und in einer relativ zur Führungsstange 1 in Zuführrichtung Z maximal ausgelenkten Position gehalten.

Das Steuerelement 4 umfasst einen Kopplungsbereich in Form eines ersten Zahnsegmentabschnittes 41, der sich entlang der Verschiebungsachse V auf einem geradlinigen Abschnitt des Steuerelementes 4 erstreckt. Dieser Zahnsegmentabschnitt 41 greift in ein aus zwei Zahnritzeln 7a, 7b gebildetes Getriebe, das wiederum in einen Kopplungsabschnitt des Schwenkelementes 6 in Form eines zweiten Zahnsegmentabschnittes 61 eingreift. Die Zahnritzel 7a, 7b und das Schwenkelement 6 sind über jeweils eine relativ zur Führungsstange 1 ortsfeste Drehachse drehbar gelagert. Entlang eines von der Drehachse des Schwenkelementes 6 radial beabstandeten Kreisabschnittes erstreckt sich der zweite Zahnsegmentabschnitt 61, der in das zweite Zahnritzel 7b greift.

Aufgrund der kraftschlüssigen Verbindung zwischen dem Schieber 2 und dem Verriegelungselement 3 und der Kopplung des Verriegelungselementes 3 mit dem Steuerelement 4 über die Drehachse 34, wirken die Federkräfte der Druckfeder 8 und der Zugfeder 9 gegeneinander. Die Federkonstanten der Druckfeder 8 und der Zugfeder 9 sind derart ausgebildet, dass in der Ruheposition die auf den Schieber 2, das Verriegelungselement 3 und das Steuerelement 4 ausgeübte Federkraft der Druckfeder 8 die entgegengesetzt wirkende Federkraft der Zugfeder 9 übersteigt. Dadurch drückt der Schieber 2 das Steuerelement 4 entlang der Verschiebungsachse V in eine Ruhelage, in der das Steuerelement 4 in Zuführrichtung Z relativ zur Führungsstange 1 maximal ausgelenkt ist und über die Zahnritzel 7a, 7b das Schwenkelement in eingeschwenktem Zustand hält. Die Ruhelage des Steuerelementes 4 kann dabei durch einen mechanischen Anschlag definiert sein, der die Auslenkung des Steuerelementes 4 und folglich auch die Dehnung der zweiten Zugfeder 9 begrenzt. In dieser Ruhelage des Steuerelementes 4 greifen die Zähne des Zahnritzels 7a in den der Zugfeder 9 zugewandten Anfangsbereich des linearen Zahnsegmentabschnittes 41 ein.

Das Verriegelungselement 3 erstreckt sich in der Ruheposition im wesentlichen parallel zur Verschiebungsachse V des Steuerelementes 4 und liegt dabei auf dem Anschlagelement 5a, 5b auf. Das Anschlagelement ist zweiteilig aus einem Anschlag 5a und einer Geradführung 5b aufgebaut, die aber so mit einander verbunden sind, dass sie eine Einheit bilden. Die mit der Geradführung 5b des Anschlagelementes 5a, 5b verbundene Zugfeder 10 ist in der Ruheposition entspannt. Der Verschiebeweg des Anschlagelementes 5a, 5b kann in beide Richtungen entlang der Verschiebungsachse V mittels mechanischen Anschlägen begrenzt werden.

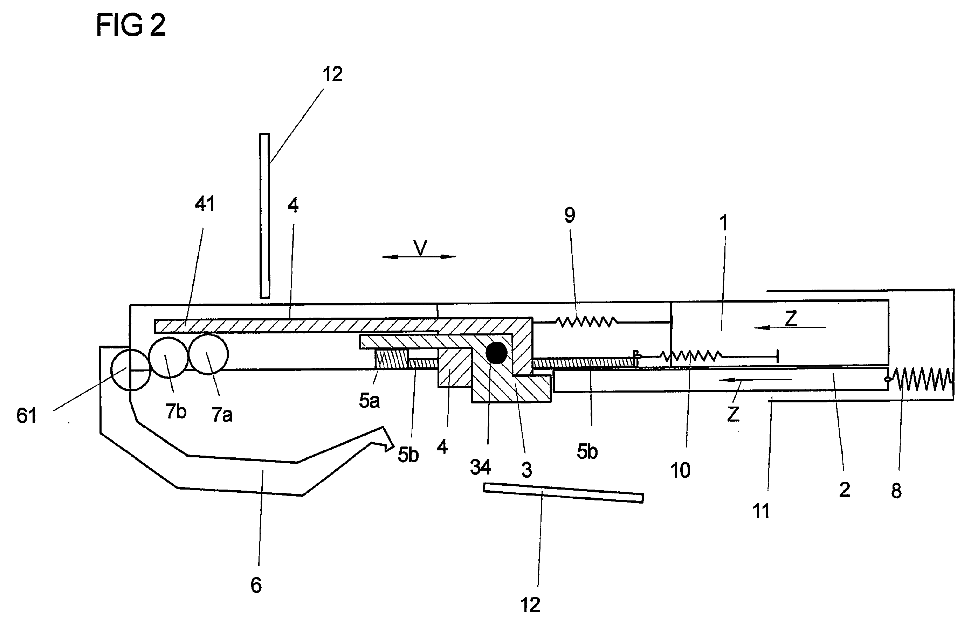

In Fig. 2 ist der Gurtbringer zu Beginn der Zuführung gezeigt. Wenn die Führungsstange 1 aus der in Fig. 1 dargestellten Ruheposition bewegt wird, wird der Schieber 2, angetrieben durch die komprimierte Druckfeder 8, der Führungsstange 1 zunächst in Zuführrichtung Z folgen und dabei die kraftschlüssige Verbindung zum Verriegelungselement 3 und somit auch zum Steuerelement 4 aufrechterhalten. Durch die Bewegung der Führungsstange 1 nimmt die durch die Druckfeder 8 auf den Schieber 2 ausgeübte Kraft kontinuierlich ab, übersteigt aber zunächst die Kraft der Zugfeder 9 und hält so das Steuerelement 4 relativ zur Führungsstange 1 in Position. Die Federkonstanten der Druckfeder 8 und der Zugfeder 9 sind so ausgelegt, dass ein Gleichgewicht der Federkräfte erst erreicht wird, nachdem die Führungsstange 1 mit dem an der Führungsstange 1 angelenkten Schwenkelement 6 aus der Öffnung in der Innenverkleidung 12 ausgetreten ist. Dadurch wird bewirkt, dass das Verschwenken des Schwenkelementes 6 erst nach Erreichen einer Schwenklage beginnt, nämlich dann, wenn das Schwenkelement 6 ungehindert durch die Innenverkleidung 12 verschwenkt werden kann.

Während der weiteren Zuführung nehmen die Federkräfte der Druckfeder 8 und der Zugfeder 9 auf das Steuerelement 4 gleichmäßig ab, die Druckfeder 8 dehnt sich und die Zugfeder 9 zieht sich zusammen, und das Steuerelement 4 wird entgegen der Zuführrichtung Z relativ zur Führungsstange 1 verschoben. Durch die Wirkverbindung des Steuerelementes 4 mit den Zahnritzeln 7a, 7b und der Zahnritzel 7a, 7b mit dem Schwenkelement 6 treibt die Verschiebung des Steuerelementes 4 eine Rotation der Zahnritzel 7a, 7b und so das Verschwenken des Schwenkelementes 6 in die quer zur Bewegungsbahn der Gurtfangeinrichtung verlaufende, gespreizte Position an.

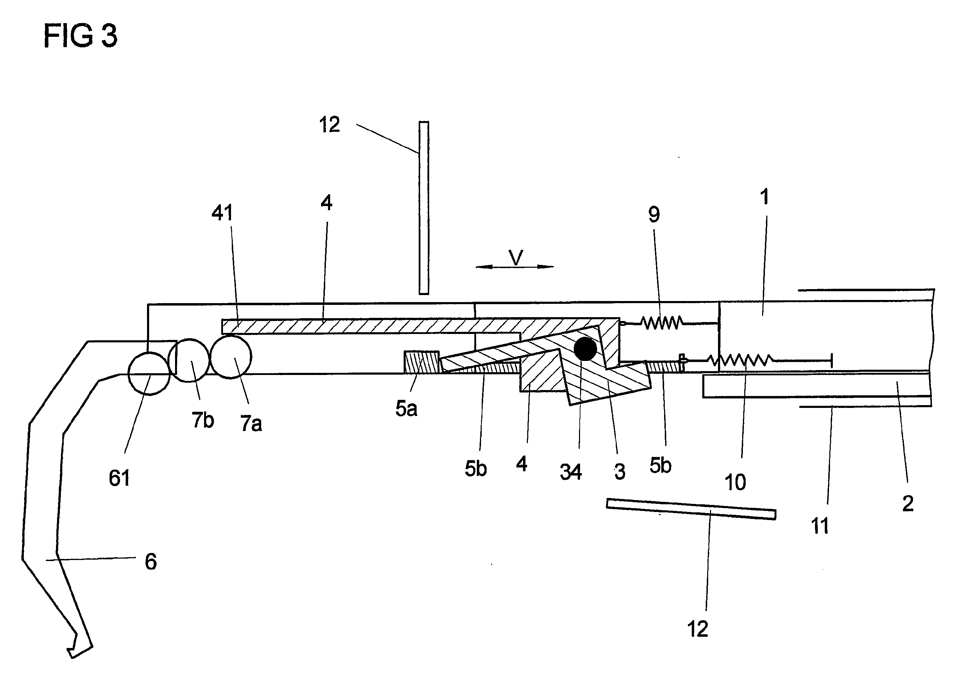

Bei Erreichen der gespreizten Position greift das erste Zahnritzel 7a in den von der Zugfeder 9 abgewandten Endabschnitt des Zahnsegmentabschnittes 41 am Steuerelement 4, wie in Fig. 3 dargestellt, und das Verschwenken des Schwenkelementes 6 ist abgeschlossen. Zur genauen Festlegung der gespreizten Position kann die maximale Auslenkung des Schwenkelementes 6 beispielsweise durch einen mechanischen Anschlag zwischen dem Schwenkelement 6 und der Führungsstange 1 begrenzt werden.

Während der weiteren Zuführung der Führungsstange 1 mit dem daran angeordneten Schwenkelement 6 wird die kraftschlüssige Verbindung zwischen dem Schieber 2 und dem Verriegelungselement 3 aufgehoben. Sobald die mit dem Schieber 2 verbundene Druckfeder 8 sich entspannt hat oder der Schieber 2 an einen Anschlag zur Begrenzung des Verschiebweges des Schiebers 2 anschlägt, verweilt der Schieber 2 in seiner Position, während das Steuerelement 4 und somit auch das Verriegelungselement 3 mit der Führungsstange 1 weiter bewegt werden und so die kraftschlüssige Verbindung aufgehoben wird. Durch die Verschiebung des Steuerelementes 3 während des Verschwenkvorganges des Schwenkelementes 6 ist auch das Verriegelungselement 3 relativ zum Anschlagelement 5a, 5b verschoben worden. Sobald das Schwenkelement 6 die gespreizte Position erreicht hat, wird das Verriegelungselement 3 nicht mehr vom Anschlagelement 5a unterstützt und durch die mittels einer Dreh- oder Biegefeder bewirkte Vorspannung gegenüber dem Steuerelement 4 um die Drehachse 34 relativ zum Steuerelement 4 rotiert, so dass das dem Schwenkelement 6 zugewandte Ende des Verriegelungselement 3 in Zuführrichtung Z gesehen vor dem Anschlagelement 5a zu liegen kommt. Weil das Anschlagelement 5a, 5b durch die Federkraft der Zugfeder 10 relativ zur Führungsstange 1 in Position gehalten wird, ist das Verriegelungselement 3 und somit auch das Steuerelement 4 in Zuführrichtung Z relativ zur Führungsstange 1 blockiert. Das Schwenkelement 6 ist auf diese Weise verriegelt und kann in der weiteren Zuführung nicht durch die Kraftwirkung des Sicherheitsgurtes auf das Schwenkelement 6 eingeschwenkt werden.

Bei der normalen Rückführung der Führungsstange 1, angetrieben durch den Motorantrieb, läuft der Verschwenkvorgang des Schwenkelements 6 rückwärts ab. Während der Rückführung tritt dabei das Verriegelungselement 3 in eine kraftschlüssige Verbindung mit dem Schieber 2, wird durch die Winkelstellung in seiner Verriegelungsposition relativ zum Schieber 2 in seine Ausgangslage rotiert und somit nicht mehr durch das Anschlagelement 5a blockiert, so dass das Schwenkelement 6 entriegelt ist. Die Kräfte der mit dem Schieber 2 verbundenen Druckfeder 8 und der am Steuerelement 4 angreifenden Zugfeder 9 wirken nach dem Kraftschluss des Schiebers 2 und des Verriegelungselementes 3 gegeneinander und bewirken, dass durch die weitere Rückführbewegung die Druckfeder 8 komprimiert und die Zugfeder 9 gedehnt wird. Dadurch wird der Schieber 2 und das über das Verriegelungselement 3 mit dem Schieber 2 kraftschlüssig verbundene Steuerelement 4 relativ zur Führungsstange 1 entgegen der Rückführrichtung R verschoben, und das Schwenkelement 6 wird eingeschwenkt.

Etwas anders ist der Ablauf, wenn die Rückführung der Führungsstange 1 manuell erfolgt, zum Beispiel im Notfallbetrieb bei Ausfall der elektrischen Versorgung.

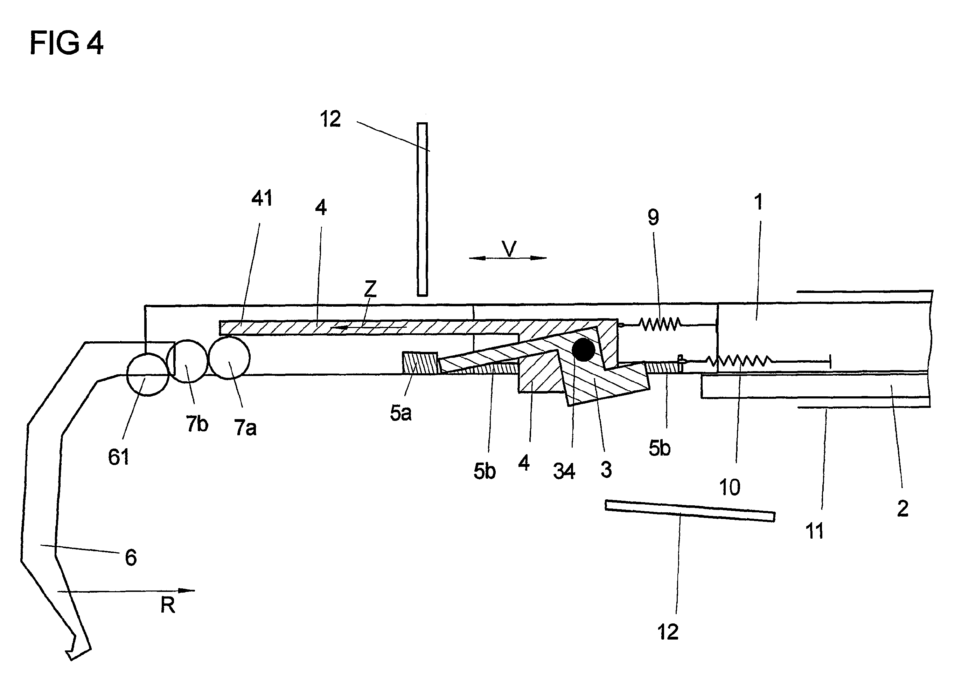

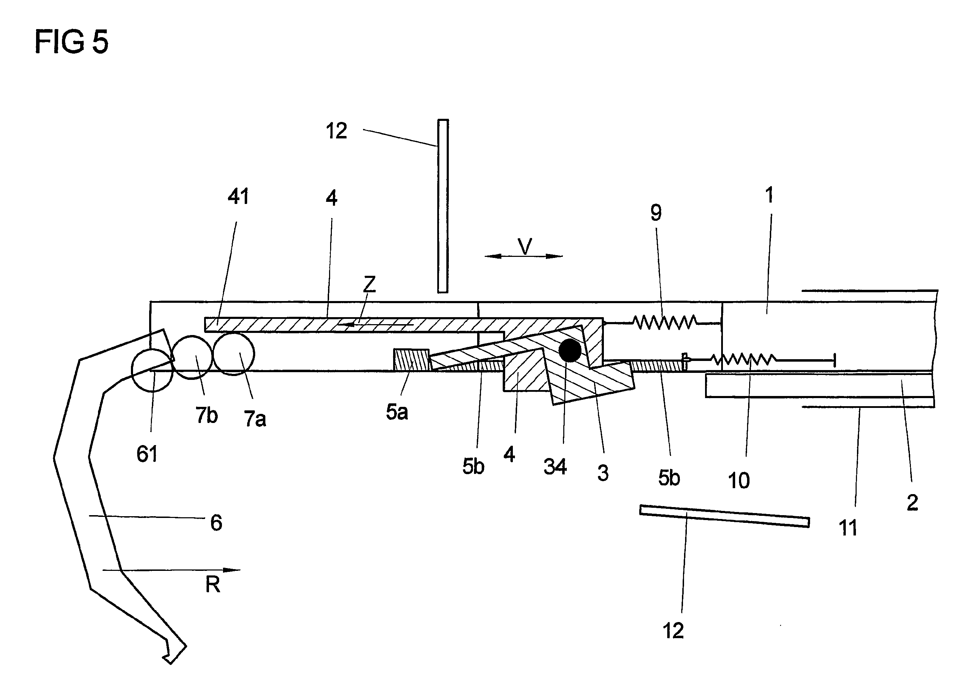

Fig. 4 zeigt den Gurtbringer zu Beginn des manuellen Rückführvorgangs. Während der manuellen Rückführung wird zunächst durch einen Benutzer Kraft auf das Schwenkelement 6 ausgeübt. Ist diese Kraft größer als die Federkraft der das Anschlagelement 5a, 5b in Position haltenden Zugfeder 10, so wird das Schwenkelement 6 in Rückführrichtung R eingeschwenkt und das mit dem Schwenkelement 6 über das Getriebe 7a, 7b gekoppelte Steuerelement 4 relativ zur Führungsstange 1 entgegen der Rückführrichtung R verschoben. Dadurch wird das Anschlagelement 5a, 5b über das mit dem Steuerelement 4 verbundene Verriegelungselement 3 entgegen der Rückführrichtung R ausgelenkt und sowohl die Zugfeder 9, die am Steuerelement 4 angreift, als auch die Zugfeder 10, die mit dem Anschlagelement 5a, 5b verbunden ist, werden gedehnt. Dieses ist in Fig. 5 dargestellt.

Das Schwenkelement 6 kann also in verriegeltem Zustand manuell eingeschwenkt werden, wenn die Kraftwirkung auf das Schwenkelement 6 hinreichend groß ist. Die zum Einschwenken benötigte Kraft wird durch die Wahl der das Steuerelement 4 und das Anschlagelement 5a, 5b haltenden Federelemente 9, 10 bestimmt, deren Federkonstanten im allgemeinen so beschaffen sein müssen, dass das Einschwenken nicht durch die Kraftwirkung des Sicherheitsgurtes auf das Schwenkelement 6 bewirkt wird, sondern erst durch eine hinreichend größere manuelle Kraftwirkung.

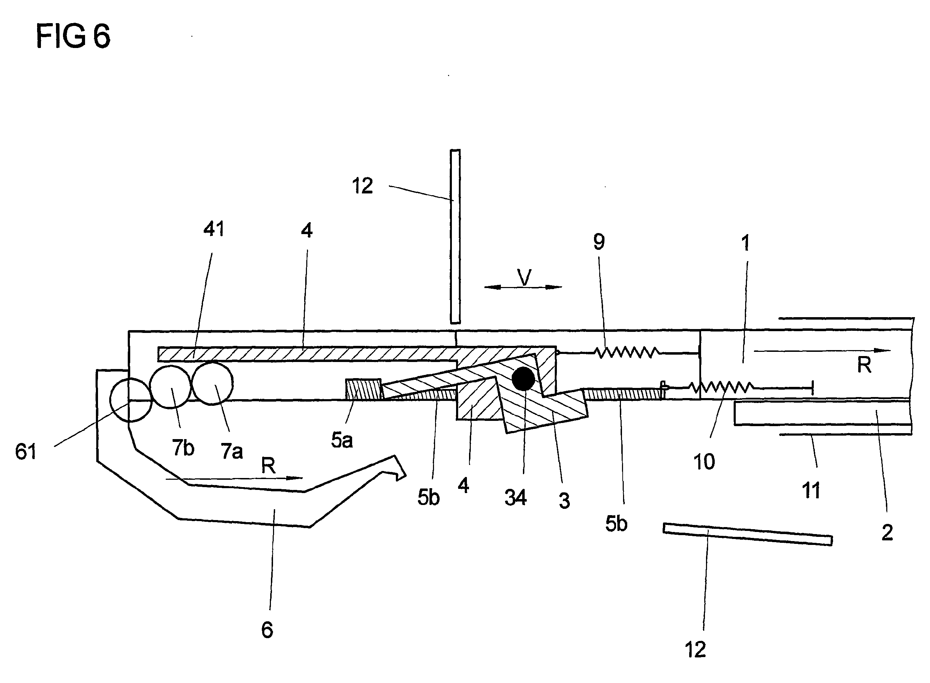

Fig. 6 zeigt das Schwenkelement 6 während der Rückführung in vollständig eingeschwenktem Zustand. In diesem Zustand sind die mit dem Steuerelement 4 und dem Anschlagelement 5a, 5b verbundenen Zugfedern 9, 10 maximal gedehnt, und das Anschlagelement 5a, 5b ist relativ zur Führungsstange 1 maximal ausgelenkt. Wie oben bereits angedeutet lassen sich die Verschiebewege des Steuerelementes 4 und des Anschlagelementes 5a, 5b durch mechanische Anschläge begrenzen. Denkbar ist auch, dass die Verschiebung des Anschlagelementes 5a, 5b in der Rückführbewegung relativ zur Führungsstange 1 so begrenzt ist, dass das Schwenkelement 6 zunächst nicht vollständig eingeschwenkt werden kann, sondern dieses erst nach der Entriegelung möglich ist.

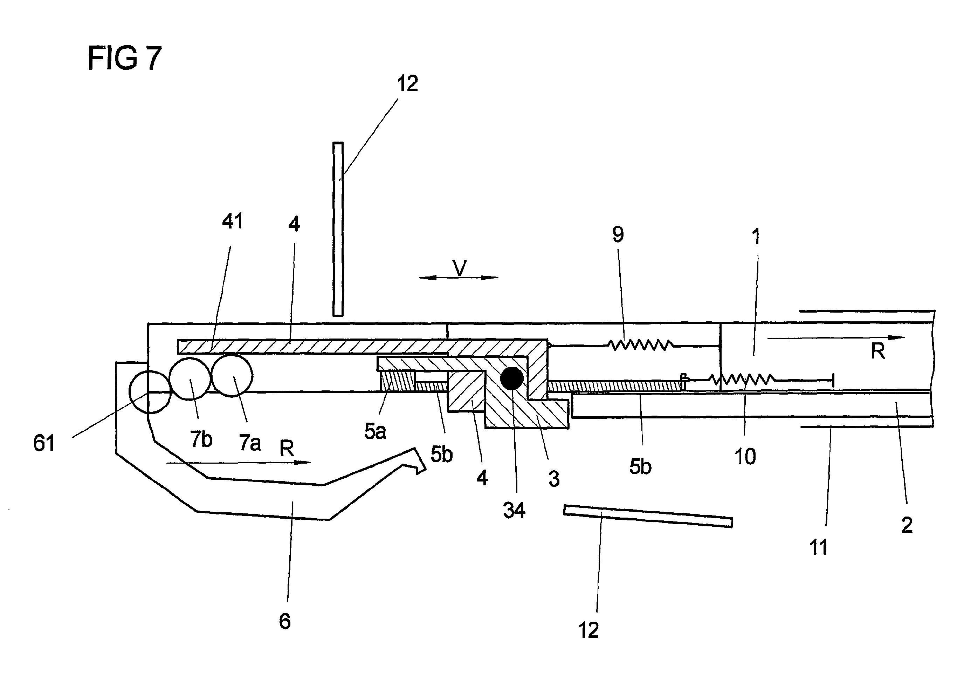

Während der weiteren Rückführung der Führungsstange 1 in Rückführrichtung R tritt das Verriegelungselement 3 in eine kraftschlüssige Verbindung mit dem Schieber 2 und wird in seine Ausgangslage rotiert, bewirkt durch die Winkelstellung des Verriegelungselementes 3 zu dem Schieber 2. Somit wird das Verriegelungselement 3 nicht mehr durch das Anschlagelement 5a blockiert, und das Schwenkelement 6 ist entriegelt. Nach dem Entriegeln wird das Anschlagelement 5a, 5b durch die Federkraft der durch die Auslenkung des Anschlagelementes 5a, 5b gespannten Zugfeder 10 in seine Ausgangslage relativ zur Führungsstange 1 verschoben, in der die Zugfeder 10 entspannt ist und das Anschlagelement 5a unter dem dem Schwenkelement 6 zugewandten Ende des Verriegelungselement 3 liegt. Dieses ist in Fig. 7 gezeigt.

Zur weiteren Rückführung wird die Führungsstange 1 in die Innenverkleidung 12 geschoben, und die mit dem Schieber 2 verbundene Druckfeder 8 wird komprimiert. Sobald die Federkraft der auf den Schieber 2 wirkenden Druckfeder 8 die Kraft der am Steuerelement 4 angreifenden Zugfeder 9 übersteigt, kann das Schwenkelement 6 nicht mehr verschwenken, sondern wird durch die Kraft der Druckfeder 8 über den Schieber 2, das Verriegelungselement 3 und das Steuerelement 4 in Position gehalten. Die Rückführung ist abgeschlossen, sobald die Führungsstange 1 vollständig in die Innenverkleidung 12 geschoben ist und sich der Gurtbringer somit wieder in seiner Ruheposition befindet.

Andere Ausführungsformen der Schwenkeinrichtung und der Verriegelungsvorrichtung sind denkbar. Weitere Varianten des Gurtbringers können zum Beispiel ein gekrümmt verlaufendes Führungsmittel aufweisen, unterschiedliche Bauformen und Kombinationen der Federelemente enthalten oder ein anders geartetes Verriegelungselement verwenden, das nicht um eine Drehachse drehbar gelagert ist, sondern zum Beispiel durch Verschiebung quer zur Bewegungsrichtung des Führungsmittels in eine Verriegelungsposition bewegt wird. Darüber hinaus kann die Schwenkeinrichtung, statt durch die Bewegung des Führungsmittels, durch einen oder mehrere separate, insbesondere elektrische Antriebe betrieben werden. Grundsätzlich sind eine Vielzahl von Varianten denkbar, die von der Erfindung auch bei anders geartete Ausführungsformen Gebrauch machen.

### Bezugszeichenliste

- 1: Führungsstange
- 2: Schieber
- 3: Verriegelungselement
- 4: Steuerelement
- 5a: Erstes Teil des Anschlagelementes
- 5b: Zweites Teil des Anschlagelementes
- 6: Schwenkelement
- 7a: Erstes Zahnritzel des Getriebes
- 7b: Zweites Zahnritzel des Getriebes
- 8: Als Druckfeder ausgebildetes erstes Federelement
- 9: Als Zugfeder ausgebildetes zweites Federelement
- 10: Als Zugfeder ausgebildetes drittes Federelement
- 11: Montageeinrichtung an der Kraftfahrzeugkarosserie
- 12: Innenverkleidung
- 34: Drehachse
- 41: Zahnsegmentabschnitt am Steuerelement
- 61: Zahnsegmentabschnitt am Schwenkelement
- R: Rückführrichtung
- V: Verschiebungsachse
- Z: Zuführrichtung

## Patentansprüche

1. Gurtbringer für ein Kraftfahrzeug mit
- einer Gurtfangeinrichtung zum Zuführen eines Sicherheitsgurtes,
- einem Führungsmittel für die Zu- und Rückführung der Gurtfangeinrichtung,
- einem Schwenkelement, das mit einem Ende um eine Drehachse verschwenkbar am Führungsmittel angelenkt ist und in einer Ruheposition vor Beginn der Zuführung mit einer Komponente der Zuführrichtung entgegengerichtet ist und
- einer zusammen mit dem Schwenkelement die Gurtfangeinrichtung ausbildenden Schwenkeinrichtung, die das Schwenkelement während der Zuführung aus der Ruheposition in eine quer zur Bewegungsbahn verlaufende, gespreizte Position verschwenkt,
**dadurch gekennzeichnet,**
**dass** die Schwenkeinrichtung (2 - 4, 5a, 5b, 6, 7a, 7b, 8 - 10) eine Verriegelungsvorrichtung (3, 5a, 5b) enthält, die
- während der Zuführung das Schwenkelement (6) in seiner gespreizten Position so verriegelt, dass es durch die Kraftwirkung des Sicherheitsgurtes nicht einschwenkt,
- das Einschwenken des Schwenkelementes (6) durch manuelle Krafteinwirkung bei bestehender Verriegelung ermöglicht und
- sich bei Rückführung des Führungsmittels (1) automatisch entriegelt.

2. Gurtbringer nach Anspruch 1, **dadurch gekennzeichnet, dass** die Schwenkeinrichtung (2 - 4, 5a, 5b, 6, 7a, 7b, 8 - 10) durch die Bewegung des Führungsmittels (1) gesteuert ist.

3. Gurtbringer nach einem der Ansprüche 1 bis 2, **dadurch gekennzeichnet, dass** sowohl bei der manuellen Rückführung als auch bei der Rückführung durch einen Antrieb die Verriegelung des Schwenkelementes (6) automatisch aufgehoben wird.

4. Gurtbringer nach einem der voranstehenden Ansprüche, **dadurch gekennzeichnet, dass** die Schwenkeinrichtung (2 - 4, 5a, 5b, 6, 7a, 7b, 8 - 10) in Richtung des Führungsmittels (1) verschiebbare Elemente (2 - 4, 5a, 5b) und mechanische Federn (8 - 10) enthält.

5. Gurtbringer nach Anspruch 4, **dadurch gekennzeichnet, dass** die Schwenkeinrichtung (2 - 4, 5a, 5b, 6, 7a, 7b, 8 - 10) ein Steuerelement (4), ein Verriegelungselement (3), ein Anschlagelement (5a, 5b) und ein Getriebe (7a, 7b) aufweist, die mit dem Führungsmittel (1) so zusammenwirken, dass durch die Zuführbewegung das Schwenkelement (6) in seine gespreizte Position verschwenkt und verriegelt wird.

6. Gurtbringer nach Anspruch 5, **dadurch gekennzeichnet, dass** das Verriegelungselement (3), das Steuerelement (4) und das Anschlagelement (5a, 5b) als Stangenelemente ausgebildet sind, das Verriegelungselement (3) und das Steuerelement (4) miteinander über eine Drehachse (34) verbunden sind und das Steuerelement (4) und das Anschlagelement (5a, 5b) entlang der Verschiebungsachse (V) verschiebbar am Führungsmittel (1) gelagert sind.

7. Gurtbringer nach einem der Ansprüche 5 bis 6, **dadurch gekennzeichnet, dass** die Schwenkeinrichtung (2 - 4, 5a, 5b, 6, 7a, 7b, 8 - 10) einen Schieber (2) und ein erstes, ein zweites und ein drittes Federelement (8, 9, 10) aufweist, die mit dem Steuerelement (4), dem Verriegelungselement (3) und dem Anschlagelement (5a, 5b) zum Verschwenken und Verriegeln des Schwenkelementes (6) zusammenwirken.

8. Gurtbringer nach Anspruch 7, **dadurch gekennzeichnet, dass** das Verschwenken des Schwenkelementes (6) durch die Schwenkeinrichtung (2 - 4, 5a, 5b, 6, 7a, 7b, 8 - 10) während der Zuführung erst nach Austritt des Schwenkelementes (6) aus der Innenverkleidung (12) erfolgt.

9. Gurtbringer nach Anspruch 8, **dadurch gekennzeichnet, dass** in der gespreizten Position des Schwenkelementes (6) das Verriegelungselement (3) durch das Anschlagelement (5a, 5b) in Zuführrichtung (Z) relativ zum Führungsmittel (1) blockiert ist.

10. Gurtbringer nach einem der Ansprüche 5 bis 9, **dadurch gekennzeichnet, dass** der Schieber (2) über das erste Federelement (8) mit einer Montageeinrichtung (11) zur Befestigung des Gurtbringers an einer Kraftfahrzeugkarosserie verschiebbar gekoppelt ist.

11. Gurtbringer nach einem der Ansprüche 5 bis 10, **dadurch gekennzeichnet, dass** das Steuerelement (4) über das zweite Federelement (9) verschiebbar an das Führungsmittel (1) gekoppelt ist, das sich zum Zu- bzw. Rückführen der Gurtfangeinrichtung relativ zur Montageeinrichtung (11) bewegen lässt.

12. Gurtbringer nach einem der Ansprüche 5 bis 11, **dadurch gekennzeichnet, dass** das Anschlagelement (5a, 5b) über das dritte Federelement (10) verschiebbar an das Führungsmittel (1) gekoppelt ist, das sich zum Zu- bzw. Rückführen der Gurtfangeinrichtung relativ zur Montageeinrichtung (11) bewegen lässt.

13. Gurtbringer nach einem der Ansprüche 5 bis 12, **dadurch gekennzeichnet, dass** der Schieber (2) beim Rückführen des Führungsmittels (1) so auf das Verriegelungselement (3) einwirkt, dass die Verriegelungsvorrichtung (3, 5a, 5b) entriegelt wird.

14. Gurtbringer nach einem der Ansprüche 5 bis 13, **dadurch gekennzeichnet, dass** das als Federelemente (8, 9, 10) sowohl Druckfedern als auch Zugfedern verwendbar sind.

## Claims

1. A seat-belt presenter for a motor vehicle, with
- a seat-belt capture unit for supplying a seatbelt,
- a guide means for supplying and retracting the seat-belt capture unit,
- a pivoting element which is coupled at one end to the guide means in a manner such that it can pivot about an axis of rotation and, in a rest position before the beginning of the supply operation, is directed with one component counter to the supply direction, and
- a pivoting unit which, together with the pivoting element, forms the seat-belt capture unit and, during the supply operation, pivots the pivoting element out of the rest position into an expanded position running transversely with respect to the path of movement,
**characterized in that**
the pivoting unit (2-4, 5a, 5b, 6, 7a, 7b, 8-10) contains a locking device (3, 5a, 5b) which
- during the supply operation, locks the pivoting element (6) in its expanded position in such a manner that it does not pivot inward under the dynamic effect of the seatbelt,
- permits the pivoting element (6) to pivot inward by means of manual application of force while it is still locked, and
- automatically unlocks during retraction of the guide means (1).

2. The seat-belt presenter as claimed in claim 1, **characterized in that** the pivoting unit (2-4, 5a, 5b, 6, 7a, 7b, 8-10) is controlled by the movement of the guide means (1).

3. The seat-belt presenter as claimed in either of claims 1 and 2, **characterized in that** the locking of the pivoting element (6) is automatically canceled both during the manual retraction and during the retraction by means of a drive.

4. The seat-belt presenter as claimed in one of the preceding claims, **characterized in that** the pivoting unit (2-4, 5a, 5b, 6, 7a, 7b, 8-10) contains elements (2-4, 5a, 5b) which are displaceable in the direction of the guide means (1), and mechanical springs (8-10).

5. The seat-belt presenter as claimed in claim 4, **characterized in that** the pivoting unit (2-4, 5a, 5b, 6, 7a, 7b, 8-10) has a control element (4), a locking element (3), a stop element (5a, 5b) and a gear (7a, 7b), which interact with the guide means (1) in such a manner that the supply movement causes the pivoting element (6) to be pivoted into its expanded position and locked.

6. The seat-belt presenter as claimed in claim 5, **characterized in that** the locking element (3), the control element (4) and the stop element (5a, 5b) are designed as rod elements, the locking element (3) and the control element (4) are connected to each other via an axis of rotation (34), and the control element (4) and the stop element (5a, 5b) are mounted on the guide means (1) in a manner such that they can be displaced along the displacement axis (V).

7. The seat-belt presenter as claimed in either of claims 5 and 6, **characterized in that** the pivoting unit (2-4, 5a, 5b, 6, 7a, 7b, 8-10) has a slide (2) and a first, a second and a third spring element (8, 9, 10), which interact with the control element (4), the locking element (3) and the stop element (5a, 5b) in order to pivot and lock the pivoting element (6).

8. The seat-belt presenter as claimed in claim 7, **characterized in that** the pivoting of the pivoting element (6) by the pivoting unit (2-4, 5a, 5b, 6, 7a, 7b, 8-10) during the supply operation takes place only after the pivoting element (6) has emerged from the interior paneling (12).

9. The seat-belt presenter as claimed in claim 8, **characterized in that**, in the expanded position of the pivoting element (6), the locking element (3) is blocked relative to the guide means (1) in the supply direction (Z) by means of the stop element (5a, 5b).

10. The seat-belt presenter as claimed in one of claims 5 to 9, **characterized in that** the slide (2) is coupled displaceably via the first spring element (8) to an installation unit (11) for fastening the seat-belt presenter to a motor vehicle body.

11. The seat-belt presenter as claimed in one of claims 5 to 10, **characterized in that** the control element (4) is coupled displaceably via the second spring element (9) to the guide means (1) which can be moved in order to supply and retract the seat-belt capture unit relative to the installation unit (11).

12. The seat-belt presenter as claimed in one of claims 5 to 11, **characterized in that** the stop element (5a, 5b) is coupled displaceably via the third spring element (10) to the guide means (1) which can be moved in order to supply and retract the seat-belt capture unit relative to the installation unit (11).

13. The seat-belt presenter as claimed in one of claims 5 to 12, **characterized in that**, during the retraction of the guide means (1), the slide (2) acts on the locking element (3) in such a manner that the locking device (3, 5a, 5b) is unlocked.

14. The seat-belt presenter as claimed in one of claims 5 to 13, **characterized in that** both compression springs and tension springs can be used as spring elements (8, 9, 10).

## Revendications

1. Mécanisme d'amenée de ceinture pour un véhicule automobile, comprenant :
- un moyen preneur de ceinture pour faire avancer une ceinture de sécurité,
- un moyen de guidage pour l'avance et le recul du moyen preneur de ceinture,
- un élément pivotant qui est articulé par une extrémité sur le moyen de guidage avec possibilité de pivotement autour d'un axe de rotation et qui, dans une position de repos avant le commencement de l'avancement, est dirigé à l'opposé d'une composante de la direction d'avancement, et
- un système de pivotement qui, conjointement avec l'élément pivotant, forme le moyen preneur de ceinture et qui fait pivoter l'élément pivotant pendant l'avancement à partir de la position de repos jusque dans une position en écartement qui s'étend transversalement à la trajectoire de déplacement,
**caractérisé en ce que**
le système de pivotement (2-4, 5a, 5b, 6, 7a, 7b, 8-10) contient un dispositif de verrouillage (3, 5a, 5b) qui
- verrouille pendant l'avancement l'élément de pivotement (6) dans sa position en écartement de telle façon qu'il ne pivote pas sous l'effet de la force de la ceinture de sécurité,
- permet le pivotement de l'élément pivotant (6) par exercice d'une force manuelle lorsque le verrouillage est effectué, et
- se déverrouille automatiquement lors du retrait du moyen de guidage (1).

2. Mécanisme d'amenée de ceinture selon la revendication 1, **caractérisé en ce que** le système de pivotement (2-4, 5a, 5b, 6, 7a, 7b, 8-10) est commandé par le mouvement du moyen de guidage (1).

3. Mécanisme d'amenée de ceinture selon l'une des revendications 1 et 2, **caractérisé en ce que** le verrouillage de l'élément pivotant (6) est automatiquement annulé aussi bien lors du retour manuel que lors du retour par un entraînement.

4. Mécanisme d'amenée de ceinture selon l'une des revendications précédentes, **caractérisé en ce que** le système de pivotement (2-4, 5a, 5b, 6, 7a, 7b, 8-10) contient des éléments (2-4, 5a, 5b) déplaçables en direction du moyen de guidage (1) et des ressorts mécaniques (8-10).

5. Mécanisme d'amenée de ceinture selon la revendication 4, **caractérisé en ce que** le système de pivotement (2-4, 5a, 5b, 6, 7a, 7b, 8-10) comprend un élément de commande (4), un élément de verrouillage (3), un élément de butée (5a, 5b) et un mécanisme (7a, 7b), qui coopère avec le moyen de guidage (1) de telle façon que, par le mouvement d'avancement, l'élément pivotant (6) est pivoté jusque dans sa position en écartement et verrouillé.

6. Mécanisme d'amenée de ceinture selon la revendication 5, **caractérisé en ce que** l'élément de verrouillage (3), l'élément de commande (4) et l'élément de butée (5a, 5b) sont réalisés sous forme d'éléments de tige, l'élément de verrouillage (3) et l'élément de commande (4) sont reliés l'un à l'autre via un axe de rotation (34), et l'élément de commande (4) et l'élément de butée (5a, 5b) sont montés sur le moyen de guidage (1) avec possibilité de déplacement le long de l'axe de déplacement (V).

7. Mécanisme d'amenée de ceinture selon l'une des revendications 5 et 6, **caractérisé en ce que** le système de pivotement (2-4, 5a, 5b, 6, 7a, 7b, 8-10) comprend un coulisseau (2) et un premier, un second, et un troisième élément à ressort (8, 9, 10) qui coopèrent avec l'élément de commande (4), avec l'élément de verrouillage (3) et avec l'élément de butée (5a, 5b) pour faire pivoter et verrouiller l'élément pivotant (6).

8. Mécanisme d'amenée de ceinture selon la revendication 7, **caractérisé en ce que** le pivotement de l'élément pivotant (6) par le système de pivotement (2-4, 5a, 5b, 6, 7a, 7b, 8-10) a lieu pendant l'avancement uniquement après la sortie de l'élément pivotant (6) hors de l'habillage intérieur (12).

9. Mécanisme d'amenée de ceinture selon la revendication 8, **caractérisé en ce que**, dans la position en écartement de l'élément pivotant (6), l'élément de verrouillage (3) est bloqué par l'élément de butée (5a, 5b) en direction d'avancement (Z) par rapport au moyen de guidage (1).

10. Mécanisme d'amenée de ceinture selon l'une des revendications 5 à 9, **caractérisé en ce que** le coulisseau (2) est couplé avec possibilité de déplacement via le premier élément à ressort (8) avec un système de montage (11) pour la fixation du mécanisme d'amenée de ceinture sur une carrosserie de véhicule automobile.

11. Mécanisme d'amenée de ceinture selon l'une des revendications 5 à 10, **caractérisé en ce que** l'élément de commande (4) est couplé via le second élément à ressort (9) de façon déplaçable sur le moyen de guidage (1), lequel peut être déplacé par rapport au système de montage (11) pour l'avancement ou le recul du système preneur de ceinture.

12. Mécanisme d'amenée de ceinture selon l'une des revendications 5 à 11, **caractérisé en ce que** l'élément de butée (5a, 5b) est couplé via le troisième élément à ressort (10) de façon déplaçable sur le moyen de guidage (1), lequel peut être déplacé par rapport au système de montage (11) pour l'avancement ou le recul du système preneur de ceinture.

13. Mécanisme d'amenée de ceinture selon l'une des revendications 5 à 12, **caractérisé en ce que** le coulisseau (2) agit lors du retour du moyen de guidage (1) sur l'élément de verrouillage (3) de telle manière que le dispositif de verrouillage (3, 5a, 5b) est déverrouillé.

14. Mécanisme d'amenée de ceinture selon l'une des revendications 5 à 13, **caractérisé en ce que** des ressorts de compression tout comme des ressorts de traction sont utilisables à titre d'éléments à ressort (8, 9, 10).
